# EUROPÄISCHE PATENTSCHRIFT

(11) **EP 3 475 671 B1**
(45) Veröffentlichungstag und Bekanntmachung des Hinweises auf die Patenterteilung: **29.07.2020**
(21) Anmeldenummer: 17732131.2
(22) Anmeldetag: 23.06.2017
(51) Int. Cl.: G01G 3/14, G01G 3/18, G01L 1/22, G01K 7/02, G01K 7/16

(54) **WÄGEZELLE MIT KOMPENSATION VON TEMPERATURDIFFERENZEN**
LOAD CELL HAVING COMPENSATION OF TEMPERATURE DIFFERENCES
CELLULE DE PESÉE À COMPENSATION DES DIFFÉRENCES DE TEMPÉRATURE

(30) Priorität: 27.06.2016 DE 102016111729
(43) Veröffentlichungstag der Anmeldung: 01.05.2019
(73) Patentinhaber: Bizerba SE & Co. KG, 72336 Balingen (DE)
(72) Erfinder: EGER, Thomas, 72393 Burladingen (DE)
(74) Vertreter: Manitz Finsterwald Patent- und Rechtsanwaltspartnerschaft mbB
(86) Internationale Anmeldenummer: PCT/EP2017/065522
(87) Internationale Veröffentlichungsnummer: WO 2018/001886

(56) Entgegenhaltungen:
- GB-A- 1 263 182
- GB-A- 1 523 301
- US-A- 3 293 909

## Beschreibung

Die vorliegende Erfindung betrifft eine Wägezelle für eine Waage, mit einer Messeinrichtung, beispielsweise einer aus Dehnungsmessstreifen gebildeten Wheatstone-Brücke, zur Erzeugung eines einem einwirkenden Gewicht entsprechenden, temperaturabhängigen Gewichtsmesssignals und mindestens einem Temperatursensor zur Messung einer Temperatur der Wägezelle, wobei mittels einer Auswerteeinheit aus dem erzeugten Gewichtsmesssignal und der gemessenen Temperatur ein temperaturkompensiertes Gewicht berechnet werden kann. Eine derartige Wägezelle ist aus dem Dokument GB 1 423 301 A in Verbindung mit dem Dokument GB 1 263 182 A bekannt.

Solange eine Waage über einen längeren Zeitraum hinweg ausgeschaltet ist, besitzen sämtliche Bauteile der Waage zumindest im Wesentlichen dieselbe Temperatur, die der Umgebungstemperatur der Waage entspricht. Sobald die Waage jedoch eingeschaltet wird, führt dies dazu, dass sich zunächst die mit Strom betriebenen Bauteile erwärmen, und diese ihre Wärme dann auch an die anderen Bauteile abgeben, wobei sich schließlich ein stationärer Zustand einstellen wird. Dies betrifft auch die Wägezelle, so dass sich dort Bereiche mit verschiedenen Temperaturen ausbilden, bis sich ein stationärer Zustand eingestellt hat. Diese Temperaturänderungen der Wägezelle können das Gewichtsmesssignal der Messeinrichtung der Wägezelle verfälschen und so zu Fehlern bei der Gewichtsbestimmung der Waage führen. Dieses Phänomen wird allgemein als Einschaltdrift der Waage bezeichnet.

Um die durch die von der Elektronik der Waage freigesetzte Verlustwärme bei Inbetriebnahme verursachte Einschaltdrift zu kompensieren, ist es aus dem Dokument DE 103 53 414 B3 bekannt, das erzeugte Gewichtsmesssignal einer EMK-Wägezelle in Abhängigkeit von der Zeitdauer seit dem Einschalten der Waage zu korrigieren. Dabei wird zunächst ein Anfangskorrekturwert bestimmt, der davon abhängig ist, wie lange die Waage vor dem Einschalten ausgeschaltet war (Ausschaltdauer). Der Anfangskorrekturwert kann mit Hilfe eines Uhrenbausteins, eines im Bereich der außerhalb der Wägezelle angeordneten Elektronik der Waage angeordneten Temperaturfühlers, der zu zwei Zeitpunkten jeweils eine absolute Temperatur misst, oder zweier Temperaturfühler, von denen einer im Bereich der außerhalb der Wägezelle angeordneten Elektronik der Waage und einer im Bereich der Wägezelle angeordnet ist und die jeweils eine absolute Temperatur messen, bestimmt werden. Aus dem Anfangskorrekturwert und einer vorgegebenen Abklingfunktion wird dann eine gegen Null konvergierende Korrekturfunktion berechnet, mit der der zeitliche Verlauf des temperaturabhängigen Gewichtsmesssignals, d.h. die Einschaltdrift, korrigiert wird.

Der Erfindung liegt die Aufgabe zugrunde, eine Möglichkeit anzugeben, die Genauigkeit der Temperaturkompensation bei einer Gewichtsbestimmung einer Waage zu erhöhen.

Diese Aufgabe wird durch eine Wägezelle mit den Merkmalen des Anspruchs 1 gelöst, und insbesondere dadurch, dass der Temperatursensor als ein eine Temperaturdifferenz zwischen einer ersten Stelle der Wägezelle und einer zweiten Stelle der Wägezelle messender Temperatursensor ausgebildet ist.

Erfindungsgemäß wird eine Temperaturdifferenz zwischen zwei Stellen nicht durch zwei Temperatursensoren ermittelt, die jeweils für sich eine absolute Temperatur messen, wobei aus den beiden absoluten Temperaturen eine Temperaturdifferenz berechnet wird, sondern es wird durch einen Temperatursensor direkt eine Temperaturdifferenz gemessen. Auf die absolute Temperatur an der einen und/oder der anderen Stelle kommt es dabei überhaupt nicht an. Ein unmittelbar gemessener Temperaturdifferenzwert ist weniger fehlerbehaftet als ein aus zwei Temperaturmessungen berechneter Temperaturdifferenzwert. Insbesondere kann ein systematischer Fehler in Form einer Nullpunktsverschiebung nicht auftreten.

Die Temperaturdifferenz wird mit einem einzigen Thermoelement gemessen. Ein Thermoelement umfasst zwei elektrische Leiter aus unterschiedlichem Material, die an einer Seite miteinander verbunden sind, wobei an den beiden offenen Enden der Leiter eine Spannung anliegt, die von einer Temperaturdifferenz entlang der beiden Leiter abhängig ist. Die miteinander verbundene Seite befindet sich dabei an der sog. Messstelle, die beiden offenen Enden der Leiter an der sog. Vergleichsstelle. An den offenen Enden der Leiter kann eine Einrichtung angeschlossen werden, die das Signal des Thermoelements verarbeiten und/oder auswerten kann. Als Materialkombination für die beiden Leiter kommt beispielsweise Kupfer und Konstantan oder Nickel und Konstantan in Betracht. Vorzugsweise werden für die beiden Leiter Materialen gewählt, die thermoelektrische Koeffizienten besitzen, die möglichst weit auseinander liegen.

Darüber hinaus ist es von Vorteil, dass beide Stellen, die der Messung der Temperaturdifferenz zugrunde gelegt werden, Bestandteil der Wägezelle sind bzw. auf der Wägezelle liegen, und nicht eine der beiden Stellen außerhalb der Wägezelle. Die Messung der Temperaturdifferenz erfolgt damit in unmittelbarer Nähe der Messeinrichtung, deren Fehler bei der Erzeugung des Gewichtsmesssignals korrigiert werden soll, d.h. es können mit höherer Zuverlässigkeit die lokalen Temperaturverhältnisse im Bereich der Messeinrichtung bestimmt werden, wodurch die Genauigkeit der Temperaturkompensation weiter erhöht werden kann.

Ein eine Temperaturdifferenz zwischen einer ersten Stelle und einer zweiten Stelle messender Temperatursensor kann auch als ein Temperaturdifferenzmesssensor bezeichnet werden. Es können auch mehrere Temperatursensoren, insbesondere Thermoelemente, vorgesehen sein, die jeweils dazu ausgebildet sind, eine jeweilige Temperaturdifferenz zwischen einer jeweiligen ersten Stelle der Wägezelle und einer jeweiligen zweiten Stelle der Wägezelle zu messen. Es kann dann in verschiedenen Bereichen bzw. an verschiedenen Punkten der Wägezelle eine jeweilige Temperaturdifferenz gemessen werden. Die Berechnung des temperaturkompensierten Gewichts kann dann auf der Grundlage der von den mehreren Temperatursensoren gemessenen mehreren Temperaturdifferenzen erfolgen.

Die Wägezelle kann einen insbesondere als Biegestab ausgebildeten Federkörper umfassen, und die Messeinrichtung kann einen oder mehrere Dehnungsmessstreifen (DMS) zur Erfassung der elastischen Verformung des Federkörpers zur Erzeugung eines Gewichtsmesssignals umfassen. Der oder die Dehnungsmessstreifen und der eine Temperaturdifferenz messende Temperatursensor sind dann jeweils auf dem Federkörper angeordnet. Eine derartige Wägezelle wird als DMS-Wägezelle bezeichnet. Üblicherweise sind die Dehnungsmessstreifen in Form einer insbesondere Wheatstone'schen Messbrücke miteinander verschaltet. Grundsätzlich kann es sich bei der erfindungsgemäßen Wägezelle jedoch auch um eine Wägezelle nach dem Prinzip der elektromagnetischen Kraftkompensation, d.h. eine EMK-Wägezelle, handeln. Eine der beiden Stellen ist dann bevorzugt im Bereich der Spulen der EMK-Wägezelle angeordnet, die andere Stelle befindet sich bevorzugt davon entfernt.

In der Regel weist der Federkörper einer DMS-Wägezelle einen Kraftaufnahmeabschnitt, einen Krafteinleitungsabschnitt und einen zwischen dem Kraftaufnahmeabschnitt und dem Krafteinleitungsabschnitt angeordneten Verformungsabschnitt auf. Der Kraftaufnahmeabschnitt ist feststehend, der Krafteinleitungsabschnitt mit einer Lastplatte der Waage verbunden. Bevorzugt erstreckt sich der eine Temperaturdifferenz messende Temperatursensor über den Verformungsabschnitt hinweg, insbesondere derart, dass die erste Stelle auf dem Krafteinleitungsabschnitt und die zweite Stelle auf dem Kraftaufnahmeabschnitt liegt, oder umgekehrt. Der eine Temperaturdifferenz messende Temperatursensor kann grundsätzlich aber auch an anderer Stelle angeordnet sein, insbesondere aus Gründen der Platzoptimierung, insbesondere außerhalb des Verformungsabschnitts. Beispielsweise kann der Temperatursensor in einer Ecke des Federkörpers angeordnet und die beiden Leiter können, insbesondere der Ecke entsprechend, rechtwinklig abgewinkelt sein.

Es kann bevorzugt sein, wenn der oder die Dehnungsmessstreifen und einer von zwei Leitern des Thermoelements aus demselben Material gefertigt sind. Das Thermoelement kann damit in den bereits vorhandenen Aufbau mit dem oder den Dehnungsmesstreifen integriert werden. Die beiden Leiter des Thermoelements können jeweils als Leiterbahn ausgebildet sein. Insbesondere kann die eine Leiterbahn auf einer ersten Leiterebene angeordnet sein, und die andere Leiterbahn kann auf einer zweiten, über oder unter der ersten Leiterebene liegenden Leiterebene angeordnet sein.

Ferner kann - neben dem eine Temperaturdifferenz messenden Temperatursensor - ein weiterer Temperatursensor vorgesehen sein, der zur Messung einer absoluten Temperatur vorgesehen ist. Dieser weitere Temperatursensor kann zur Korrektur des Nullpunkts der Waage im eingeschwungenen Zustand verwendet werden, d.h. wenn sich nach dem Einschalten der Waage ein hinsichtlich der Erwärmung der Waage und der Wärmverteilung über die Waage hinweg stationärer Zustand eingestellt hat. Darüber hinaus kann die absolute Temperatur auch zur Korrektur der bei der Kalibrierung der Wägezelle ermittelten Kennwerte der Wägezelle verwendet werden. Diese Korrektur ist jedoch unabhängig von der Korrektur der Einschaltdrift mittels des eine Temperaturdifferenz messenden Temperatursensors. Beide Korrekturvorgänge können aber einander überlagert werden. Der weitere Temperatursensor zur Messung einer absoluten Temperatur kann auf dem vorgenannten Kraftaufnahmeabschnitt, dem vorgenannten Krafteinleitungsabschnitt oder dem vorgenannten Verformungsabschnitt angeordnet sein.

Nach einer Ausführungsform der Erfindung umfasst das Thermoelement zwei elektrische Leiter, wobei wenigstens einer der beiden Leiter zusätzlich ein temperaturabhängiges elektrisches Widerstandselement umfasst bzw. als temperaturabhängiger Widerstand ausgeführt ist. Gemäß dieser Ausführungsform kann also ein Widerstandselement in das Thermoelement integriert werden. Mit dem hierdurch geschaffenen Bauelement kann neben einer Temperaturdifferenz auch eine absolute Temperatur gemessen werden, wie nachstehend noch näher erläutert ist. Bei diesem Bauelement handelt es sich folglich um eine Kombination aus Thermoelement und absolutem Temperatursensor. Hierdurch können Anschlusspins und Schaltungselemente in einer Auswerteeinheit bzw. auf einer Auswerteelektronik eingespart werden. Das zusätzliche temperaturabhängige elektrische Widerstandselement kann beispielsweise als mäanderförmiger Leiter ausgebildet sein.

Die vorliegende Erfindung betrifft ferner eine Waage mit einer Wägezelle, wie sie vorstehend erläutert ist.

Insbesondere ist eine Auswerteeinheit, insbesondere mit einem Analog-DigitalWandler und/oder einer Steuereinheit, vorgesehen, die dazu ausgelegt ist, aus dem erzeugten Gewichtsmesssignal und der gemessenen Temperaturdifferenz ein temperaturkompensiertes Gewicht zu berechnen. Die Auswerteeinheit kann dabei Bestandteil der Wägezelle sein oder als Bestandteil der Waage außerhalb der Wägezelle angeordnet sein.

Bevorzugt ist die Auswerteinheit zur Berechnung des temperaturkompensierten Gewichts mit der Auswerteinheit zur Auswertung der Gewichtsmesssignale der Messeinrichtung identisch. Zur Berechnung des temperaturkompensierten Gewichts kann demnach die bei einer gewöhnlichen Waage ohnehin bereits vorhandene Auswerteinheit zur Auswertung der Gewichtsmesssignale der Messeinrichtung verwendet werden. Ist die Auswerteeinheit von der Wägezelle umfasst, kann die Wägezelle als eine digitale Wägezelle bezeichnet werden, andernfalls als eine analoge Wägezelle. Von einer digitalen Wägezelle werden die Gewichtsmesssignale der Messeinrichtung und die Temperaturdifferenzen des eine Temperaturdifferenz messenden Temperatursensors als digitale Signale ausgegeben, bei einer analogen Wägezelle als analoge Signale.

Nach einer bevorzugten Ausführungsform ist die Auswerteeinheit derart ausgebildet, dass das temperaturkompensierte Gewicht fortlaufend aus dem jeweils aktuell erzeugten Gewichtsmesssignals und der jeweils aktuell gemessenen Temperaturdifferenz berechnet wird. Der zeitliche Verlauf des temperaturkompensierten Gewichts wird demnach nicht wie aus dem Stand der Technik bekannt anhand einer vorgegebenen Abklingfunktion berechnet, sondern anhand aktueller Messwerte, so dass die Temperaturkompensation mit weit höherer Zuverlässigkeit und Genauigkeit erfolgen kann. Ferner ermöglicht die erfindungsgemäße Temperaturkompensation mit aktuellen Messwerten, dass auch Fehler kompensiert werden können, die auf einer anderen Erwärmung als durch die Elektronik der Waage basieren, beispielsweise auf einer Erwärmung durch warme Gewichte, wobei auch mehrere, insbesondere verschiedene Wärmequellen vorhanden sein können.

Es hat sich herausgestellt, dass das temperaturkompensierte Gewicht über eine einfache mathematische Funktion berechnet werden kann. Insbesondere kann der Berechnung des temperaturkompensierten Gewichts aus dem erzeugten Gewichtsmesssignal und der gemessenen Temperaturdifferenz eine lineare oder quadratische Funktion zugrunde gelegt werden. Es ist dann nur ein geringer Rechenaufwand erforderlich. Es kann der Berechnung aber auch eine Polynomfunktion höheren Grades zugrunde gelegt werden.

Umfasst das Thermoelement zwei elektrische Leiter, wobei wenigstens einer der beiden Leiter zusätzlich ein temperaturabhängiges elektrisches Widerstandselement umfasst, wie es vorstehend erläutert ist, kann die Auswerteinheit dazu ausgelegt sein, an das Thermoelement einen Gleichstrom mit einer vorgegebenen Polarität und anschließend der entgegengesetzten Polarität anzulegen und dabei die jeweils an dem Thermoelement abfallende Spannung zu messen, und aus den beiden gemessenen Spannungen eine absolute Temperatur und/oder eine Temperaturdifferenz zu bestimmen.

Alternativ oder zusätzlich kann die Auswerteinheit dazu ausgelegt sein, an das Thermoelement eine Wechselspannung anzulegen, den Effektivwert der dabei an dem Thermoelement abfallenden Spannung zu messen und hieraus eine absolute Temperatur zu berechnen, und/oder bei weder mit Strom noch mit Spannung beaufschlagtem Thermoelement die an dem Thermoelement abfallende Spannung zu messen und hieraus eine Temperaturdifferenz zu bestimmen.

Vorteilhafte Ausgestaltungen der Erfindung sind in den Unteransprüchen, der Figurenbeschreibung und der Zeichnung beschrieben.

Die Erfindung betrifft ferner ein Verfahren betreffend den Betrieb einer Waage mit einer Wägezelle, bei dem ein einem einwirkenden Gewicht entsprechendes, temperaturabhängiges Gewichtsmesssignal erzeugt wird und mit einem Temperatursensor, nämlich einem einzigen Thermoelement, eine Temperaturdifferenz zwischen einer ersten Stelle, nämlich einer Messstelle, der Wägezelle und einer zweiten Stelle, nämlich einer Vergleichsstelle, der Wägezelle gemessen wird, wobei aus dem erzeugten Gewichtsmesssignal und der gemessenen Temperatur ein temperaturkompensiertes Gewicht berechnet wird.

Vorteilhafte Ausführungsformen des Verfahrens ergeben sich in analoger Weise aus den Weiterbildungen der erfindungsgemäßen Wägezelle und/oder Waage.

Die Erfindung wird im Folgenden beispielhaft unter Bezugnahme auf die Zeichnung beschrieben. Es zeigen, jeweils in schematischer Darstellung,
- Fig. 1: eine erfindungsgemäße Wägezelle,
- Fig. 2: den Verlauf eines erfindungsgemäß berechneten temperaturkompensierten Gewichts, und
- Fig. 3: eine erfindungsgemäße Wägezelle gemäß einer weiteren Ausführungsform.

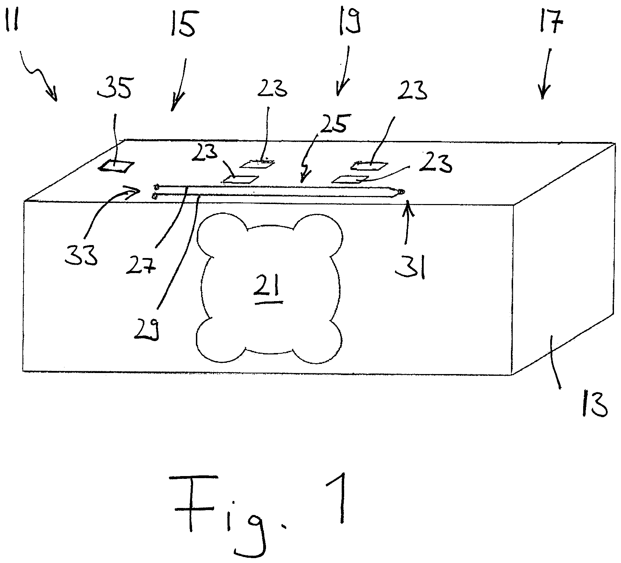

In Fig. 1 ist eine Wägezelle 11 einer ansonsten nicht dargestellten Waage mit einem Federkörper 13 gezeigt, der als ein Doppelbiegebalken aus z.B. Aluminium oder Edelstahl gefertigt ist. Der Federkörper 13 umfasst einen Kraftaufnahmeabschnitt 15 und einen Krafteinleitungsabschnitt 17. An dem Kraftaufnahmeabschnitt 15 ist der Federkörper 13 fest eingespannt, an dem Krafteinleitungsabschnitt 17 ist der Federkörper 13 mit einer Lastplatte verbunden. Zwischen den beiden Abschnitten 15 und 17 ist ein Verformungsabschnitt 19 vorgesehen, in dem eine Öffnung 21 ausgebildet ist, die den Federkörper 13 vollständig durchdringt.

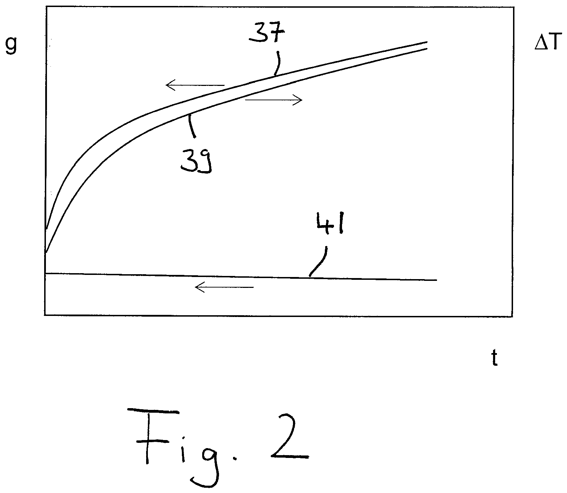

Eine Last auf dem Krafteinleitungsabschnitt 17 führt zu einer hierzu proportionalen Auslenkung bzw. Verbiegung des Federkörpers 13. Oberhalb der Öffnung 21 sind an der Außenseite des Federkörpers 13 vier Dehnungsmessstreifen (DMS) 23 angebracht, die als eine Wheatstone'sche Brücke geschaltet sind und eine Verformung des Federkörpers 13 im Bereich des Verformungsabschnitts 19 in bekannter Weise detektieren, wobei ein dem einwirkenden Gewicht entsprechendes Gewichtsmesssignal 37 (vgl. Fig. 2) erzeugt wird. Bei der Wägezelle 11 handelt es sich daher um eine DMS-Wägezelle. Die Auswerteeinheit, mit der das Gewichtsmesssignal 37 der Wheatstone'sche Brücke 23, eine Brückenspannung, ausgewertet wird, befindet sich bei der beschriebenen Ausführungsform außerhalb der Wägezelle 11. Die Auswerteeinheit kann jedoch ebenso Bestandteil der Wägezelle 11 sein.

Das Gewichtsmesssignal 37 der Dehnungsmessstreifen 23 ist jedoch temperaturabhängig, da sich einerseits der Federkörper 13 bei Änderung der Temperatur ausdehnt und andererseits die elektrischen Widerstände der Dehnungsmessstreifen 23 temperaturabhängig sind. Dies ist insbesondere beim Einschalten der Waage ein Problem (Einschaltdrift), da die Elektronik der Waage dann eine Verlustleistung abgibt und zu diesem Zeitpunkt folglich eine Temperaturänderung eintritt, bis sich hinsichtlich der Temperaturverteilung ein Gleichgewichtszustand eingestellt hat. Von dieser Temperaturänderung ist auch die Wägezelle 11 betroffen. Ist die Elektronik der Waage beispielsweise in der Nähe des Kraftaufnahmeabschnitts 15 angeordnet, wird der Wägezelle 11 von dieser Seite kommend Wärme zugeführt, wobei sich letztlich ein Temperaturgradient über die Wägezelle 11 hinweg mit einem wärmeren Kraftaufnahmeabschnitt 15 und einem hierzu im Vergleich kälteren Krafteinleitungsabschnitt 17 einstellen wird.

Um die das Gewichtsmesssignal 37 verfälschenden Temperaturänderungen, die beim Einschalten der Waage und/oder anderweitig hervorgerufen werden, zu kompensieren, ist auf dem Federkörper 13 zusätzlich ein Temperatursensor 25 in Form eines Thermoelements angeordnet. Das Thermoelement 25 ist wie aus dem Stand der Technik bekannt ausgebildet und umfasst einen ersten Leiter 27 aus einem ersten Material und einen zweiten Leiter 29 aus einem zweiten, von dem ersten verschiedenen Material, wobei die beiden Materialien unterschiedliche thermoelektrische Koeffizienten aufweisen und die beiden Leiter 27, 29 an ihren in Fig. 1 rechten Enden miteinander verbunden sind. Die Messstelle 31 des Thermoelements 25 befindet sich dabei im Bereich des Krafteinleitungsabschnitts 17 der Wägezelle 11, die Vergleichsstelle 33 im Bereich des Kraftaufnahmeabschnitts 15.

Das Thermoelement 25 erzeugt in bekannter Weise an den beiden freien Enden der beiden Leiter 27 und 29 an der Vergleichsstelle 33 eine Spannung 39 (vgl. Fig. 2), die von der Temperaturdifferenz zwischen der Messstelle 31 und der Vergleichsstelle 33 abhängig ist. Mit dem Thermoelement 25 kann daher die Temperaturdifferenz zwischen der Messstelle 31 und der Vergleichsstelle 33 gemessen werden. Diese Temperaturdifferenz kann unmittelbar gemessen werden, ohne dass die Messung einer absoluten Temperatur erforderlich ist.

Die durch das Thermoelement 25 erzeugte Spannung 39 wird ebenfalls an die vorgenannte Auswerteeinheit, die auch das Gewichtsmesssignal 37 der Wheatstone'schen Brücke 23 auswertet, weitergegeben. Die Auswerteeinheit ist dann dazu ausgebildet, aus dem jeweils aktuellen Gewichtsmesssignal 37 der Wheatstone'schen Brücke 23 und dem jeweils aktuellen Spannungssignal 39 des Thermoelements 25 ein temperaturkompensiertes bzw. temperaturkorrigiertes Gewicht 41 zu berechnen, wie es in Fig. 2 beispielhaft gezeigt ist.

Die Kurven 37, 39, 41 über die Zeit t sind jeweils in linearer Darstellung gezeigt, wobei die Kurven 37 und 41 ein Gewicht in Gramm g angeben, und die Kurve 39 eine Temperaturdifferenz in Grad Celsius ΔT angibt. Der stationäre Zustand, bei dem sich die Temperaturverteilung über die Wägezelle 11 eingeschwungen hat, ist in Fig. 2 noch nicht erreicht. Wie aus der Fig. 2 ersichtlich ist, verläuft die zeitlichen Änderung des Gewichtsmesssignals 37 nach Einschalten der Waage zumindest im Wesentlichen analog zu der zeitlichen Änderung der Temperaturdifferenz 39. Die Berechnung des temperaturkorrigierten Gewichts 41 kann daher in guter Näherung auf einfache Weise auf Grundlage einer linearen oder quadratischen Funktion erfolgen, deren Terme das Gewichtsmesssignal 37 und die gemessene Temperaturdifferenz 39 umfassen.

Darüber hinaus ist in Fig. 1 noch ein weiterer Temperatursensor 35 gezeigt, der zur Messung einer absoluten Temperatur der Wägezelle 11 im Bereich des Kraftaufnahmeabschnitts 15 angeordnet ist. Mit diesem lediglich optional vorgesehenen Temperatursensor 35 können beispielsweise die bei ihrer Kalibrierung ermittelten Kennwerte der Wägezelle 11 und die Nullpunktslage des temperaturkorrigierten Gewichts 41 verifiziert und unter Umständen nachjustiert werden.

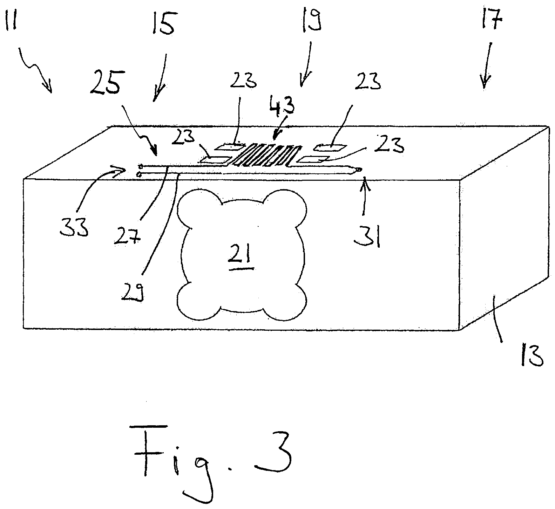

In Fig. 3 ist eine weitere Ausführungsform einer erfindungsgemäßen Wägezelle 11 gezeigt, wobei in Fig. 3 bezüglich Fig. 1 gleiche oder funktionsgleiche Elemente mit den gleichen Bezugszeichen wie in Fig. 1 versehen sind. Die Ausführungsform gemäß Fig. 3 unterscheidet sich von der Ausführungsform gemäß Fig. 1 letztlich lediglich dadurch, dass der weitere Temperatursensor 35 zur Messung einer absoluten Temperatur durch ein in das Thermoelement 25, insbesondere den Leiter 27 des Thermoelements 25, integriertes temperaturabhängiges elektrisches Widerstandselement 43 ersetzt wurde. Das Widerstandselement 43 ist in Fig. 3 dabei als dünner mäanderförmiger Leiterstreifen aus demselben Material wie der Leiter 27 des Thermoelements 25 ausgebildet, beispielsweise aus Nickel. Der andere Leiter 29 kann dann beispielsweise aus Konstantan gefertigt sein. Hierdurch liegt ein Thermoelement 25 mit einem darin integrierten absoluten Temperatursensor vor, wie nachstehend näher erläutert ist.

Wird das Thermoelement 25 an den beiden freien Enden der beiden Leiter 27 und 29 an der Vergleichsstelle 33 mit einem konstanten Gleichstrom beaufschlagt, kann dort eine Spannung abgegriffen bzw. gemessen werden, die der Summe aus der von dem Thermoelement 25 aufgrund einer Temperaturdifferenz zwischen der Messstelle 31 und der Vergleichsstelle 33 erzeugten Spannung, nachfolgend als Thermospannung bezeichnet, und der über dem Widerstandselement 43 abfallenden Spannung entspricht. Durch Umpolen des konstanten Stroms erhält man eine Spannung, die der Differenz aus der Thermospannung und der über dem Widerstandselement 43 abfallenden Spannung entspricht. Aus dem Mittelwert der Absolutwerte der beiden Messungen erhält man die Spannung über dem temperaturabhängigen Widerstandselement 43, aus der die absolute Temperatur der Wägezelle 11 an der Stelle, an der das Widerstandselement 43 angeordnet ist, bestimmt werden kann. Darüber hinaus erhält man aus der Differenz der Absolutwerte der beiden Messungen die doppelte Thermospannung des Thermoelements 25, aus der dann die Temperaturdifferenz zwischen der Messstelle 31 und der Vergleichsstelle 33 bestimmt werden kann. Die Auswerteeinheit übernimmt hierbei sowohl die Funktion einer Gleichstromquelle als auch die Funktion eines Gleichspannungs-Messgeräts und führt auch die vorgenannten Berechnungen durch.

Alternativ kann, jeweils mittels der Auswerteeinheit, die dann als Wechselspannungsquelle und als Wechselspannungs-Messgerät fungiert, an die beiden freien Enden der beiden Leiter 27 und 29 an der Vergleichsstelle 33 des Thermoelements 25 auch eine Wechselspannung angelegt und der Effektivwert der dort abfallenden Spannung gemessen werden. Dies entspricht letztlich der vorstehend erläuterten Mittelwertbildung, so dass aus dem Effektivwert auf die über dem Widerstandselement 43 abfallende Spannung und damit auf die absolute Temperatur im Bereich des Widerstandselements 43 geschlossen werden kann.

Wird - im Übrigen analog zu der Vorgehensweise bei der Ausführungsform gemäß Fig. 1 - die an dem Thermoelement 25 abfallende Spannung gemessen, ohne dass das Thermoelement 25 mit einem Strom oder einer Spannung beaufschlagt wird, entspricht die gemessene Spannung der vorgenannten Thermospannung, d.h. der von dem Thermoelement 25 aufgrund einer Temperaturdifferenz zwischen der Messstelle 31 und der Vergleichsstelle 33 erzeugten Spannung.

Mit dem erfindungsgemäßen Thermoelement und der erfindungsgemäß ausgebildeten Auswerteeinheit kann die Temperaturabhängigkeit des Gewichtsmesssignals einer Waage mit hoher Genauigkeit kompensiert werden.

### Bezuqszeichenliste

- 11: Wägezelle
- 13: Federkörper
- 15: Kraftaufnahmeabschnitt
- 17: Krafteinleitungsabschnitt
- 19: Verformungsabschnitt
- 21: Öffnung
- 23: Dehnungsmessstreifen
- 25: Thermoelement
- 27: Leiter
- 29: Leiter
- 31: Messstelle
- 33: Vergleichsstelle
- 35: weiterer Temperatursensor
- 37: Gewichtsmesssignal
- 39: Spannungssignal
- 41: temperaturkompensiertes Gewicht
- 43: temperaturabhängiges Widerstandselement

## Patentansprüche

1. Wägezelle für eine Waage, mit einer Messeinrichtung (23) zur Erzeugung eines einem einwirkenden Gewicht entsprechenden, temperaturabhängigen Gewichtsmesssignals (37) und mindestens einem Temperatursensor (25) zur Messung einer Temperatur (39) der Wägezelle (11), wobei mittels einer Auswerteeinheit aus dem erzeugten Gewichtsmesssignal (37) und der gemessenen Temperatur (39) ein temperaturkompensiertes Gewicht (41) berechnet werden kann,
**dadurch gekennzeichnet, dass**
der Temperatursensor (25) als ein eine Temperaturdifferenz (39) zwischen einer ersten Stelle (31), nämlich einer Messstelle, der Wägezelle (11) und einer zweiten Stelle (33), nämlich einer Vergleichsstelle, der Wägezelle (11) messender Temperatursensor (25), nämlich als ein einziges die Temperaturdifferenz messendes Thermoelement, ausgebildet ist.

2. Wägezelle nach Anspruch 1,
**dadurch gekennzeichnet, dass**
die Wägezelle (11) einen Federkörper (13) umfasst, und dass die Messeinrichtung zumindest einen Dehnungsmessstreifen (23) zur Erfassung der elastischen Verformung des Federkörpers (13) zur Erzeugung eines Gewichtsmesssignals (37) umfasst, wobei der oder die Dehnungsmessstreifen (23) und der eine Temperaturdifferenz (39) messende Temperatursensor (25) jeweils auf dem Federkörper (13) angeordnet sind.

3. Wägezelle nach Anspruch 2,
**dadurch gekennzeichnet, dass**
der Federkörper (13) einen Kraftaufnahmeabschnitt (15), einen Krafteinleitungsabschnitt (17) und einen zwischen dem Kraftaufnahmeabschnitt (15) und dem Krafteinleitungsabschnitt (17) angeordneten Verformungsabschnitt (19) aufweist, wobei sich der eine Temperaturdifferenz (39) messende Temperatursensor (25) über den Verformungsabschnitt (19) hinweg erstreckt, insbesondere derart, dass die erste Stelle (31) auf dem Krafteinleitungsabschnitt (17) und die zweite Stelle (33) auf dem Kraftaufnahmeabschnitt (15) liegt, oder umgekehrt.

4. Wägezelle nach Anspruch 2 oder 3,
**dadurch gekennzeichnet, dass**
der oder die Dehnungsmessstreifen (23) und einer von zwei Leitern (27, 29) des Thermoelements (25) aus demselben Material gefertigt sind.

5. Wägezelle nach zumindest einem der vorstehenden Ansprüche,
**dadurch gekennzeichnet, dass**
das Thermoelement (25) zwei elektrische Leiter (27, 29) aus unterschiedlichem Material umfasst.

6. Wägezelle nach zumindest einem der vorstehenden Ansprüche,
**dadurch gekennzeichnet, dass**
ein weiterer Temperatursensor (35) zur Messung einer absoluten Temperatur vorgesehen ist.

7. Wägezelle nach zumindest einem der vorstehenden Ansprüche,
**dadurch gekennzeichnet, dass**
das Thermoelement (25) zwei elektrische Leiter (27, 29) umfasst, wobei wenigstens einer der beiden Leiter (27, 29) zusätzlich ein temperaturabhängiges elektrisches Widerstandselement (43) umfasst.

8. Waage mit einer Wägezelle (11) nach zumindest einem der vorstehenden Ansprüche.

9. Wägezelle nach zumindest einem der Ansprüche 1 bis 7 oder Waage nach Anspruch 8,
**dadurch gekennzeichnet, dass**
eine Auswerteeinheit vorgesehen ist, die dazu ausgelegt ist, aus dem erzeugten Gewichtsmesssignal (37) und der gemessenen Temperaturdifferenz (39) ein temperaturkompensiertes Gewicht (41) zu berechnen.

10. Wägezelle oder Waage nach Anspruch 9,
**dadurch gekennzeichnet, dass**
die Auswerteeinheit zur Berechnung des temperaturkompensierten Gewichts (41) mit der Auswerteeinheit zur Auswertung der Gewichtsmesssignale (37) der Messeinrichtung (23) identisch ist.

11. Wägezelle oder Waage nach Anspruch 9 oder 10,
**dadurch gekennzeichnet, dass**
die Auswerteeinheit derart ausgebildet ist, dass das temperaturkompensierte Gewicht (41) fortlaufend aus dem jeweils aktuell erzeugten Gewichtsmesssignal (37) und der jeweils aktuell gemessenen Temperaturdifferenz (39) berechnet wird.

12. Wägezelle oder Waage nach zumindest einem der Ansprüche 9 bis 11,
**dadurch gekennzeichnet, dass**
der Berechnung des temperaturkompensierten Gewichts (41) aus dem erzeugten Gewichtsmesssignal (37) und der gemessenen Temperaturdifferenz (39) eine lineare oder quadratische Funktion zugrunde liegt.

13. Wägezelle oder Waage nach zumindest einem der Ansprüche 9 bis 12 und Anspruch 7,
**dadurch gekennzeichnet, dass**
die Auswerteinheit dazu ausgelegt ist, an das Thermoelement (25) einen Gleichstrom mit einer vorgegebenen Polarität und anschließend der entgegengesetzten Polarität anzulegen und dabei die jeweils an dem Thermoelement (25) abfallende Spannung zu messen, und aus den beiden gemessenen Spannungen eine absolute Temperatur und/oder eine Temperaturdifferenz zu bestimmen.

14. Wägezelle oder Waage nach zumindest einem der Ansprüche 9 bis 13 und Anspruch 7,
**dadurch gekennzeichnet, dass**
die Auswerteinheit dazu ausgelegt ist, an das Thermoelement (25) eine Wechselspannung anzulegen, den Effektivwert der dabei an dem Thermoelement (25) abfallenden Spannung zu messen und hieraus eine absolute Temperatur zu berechnen, und/oder
die Auswerteinheit dazu ausgelegt ist, bei weder mit Strom noch mit Spannung beaufschlagtem Thermoelement (25) die an dem Thermoelement (25) abfallende Spannung zu messen und hieraus eine Temperaturdifferenz zu bestimmen.

15. Verfahren betreffend den Betrieb einer Waage mit einer Wägezelle (11), bei dem ein einem einwirkenden Gewicht entsprechendes, temperaturabhängiges Gewichtsmesssignal (37) erzeugt wird und mit einem Temperatursensor (25), nämlich einem einzigen Thermoelement, eine Temperaturdifferenz (39) zwischen einer ersten Stelle (31), nämlich einer Messstelle, der Wägezelle (11) und einer zweiten Stelle (33), nämlich einer Vergleichsstelle, der Wägezelle (11) gemessen wird, wobei aus dem erzeugten Gewichtsmesssignal (37) und der gemessenen Temperatur (39) ein temperaturkompensiertes Gewicht (41) berechnet wird.

## Claims

1. A load cell for a scale having a measuring device (23) for generating a temperature-dependent weight measurement signal (37) corresponding to an acting weight and having at least one temperature sensor (25) for measuring a temperature (39) of the load cell (11), wherein a temperature-compensated weight (41) can be calculated from the generated weight measurement signal (37) and from the measured temperature (39) by means of an evaluation unit,
**characterized in that**
the temperature sensor (25) is configured as a temperature sensor (25) which measures a temperature difference (39) between a first point (31), namely a measurement point, of the load cell (11) and a second point (33), namely a comparison point, of the load cell (11), namely as a single thermocouple measuring the temperature difference.

2. A load cell in accordance with claim 1,
**characterized in that**
the load cell (11) comprises a spring body (13); and **in that** the measuring device comprises at least one strain gauge (23) for detecting the elastic deformation of the spring body (13) to generate a weight measurement signal (37), with the strain gauge or strain gauges (23) and the temperature sensor (25) measuring a temperature difference (39) being respectively arranged on the spring body (13).

3. A load cell in accordance with claim 2,
**characterized in that**
the spring body (13) has a force reception section (15), a force introduction section (17) and a deformation section (19) which is arranged between the force reception section (15) and the force introduction section (17), with the temperature sensor (25) measuring a temperature difference (39) extending over the deformation section (19), in particular such that the first point (31) lies on the force introduction section (17) and the second point (33) lies on the force reception section (15), or vice versa.

4. A load cell in accordance with claim 2 or claim 3,
**characterized in that**
the strain gauge or strain gauges (23) and one of two conductors (27, 29) of the thermocouple (25) are produced from the same material.

5. A load cell in accordance with at least one of the preceding claims,
**characterized in that**
the thermocouple (25) comprises two electrical conductors (27, 29) composed of different materials.

6. A load cell in accordance with at least one of the preceding claims,
**characterized in that**
a further temperature sensor (35) for measuring an absolute temperature is provided.

7. A load cell in accordance with at least one of the preceding claims,
**characterized in that**
the thermocouple (25) comprises two electrical conductors (27, 29), with at least one of the two conductors (27, 29) additionally comprising a temperature-dependent electrical resistor element (43).

8. A scale having a load cell (11) in accordance with at least one of the preceding claims.

9. A load cell in accordance with at least one of the claims 1 to 7 or a scale in accordance with claim 8,
**characterized in that**
an evaluation unit is provided which is adapted to calculate a temperature-compensated weight (41) from the generated weight measurement signal (37) and from the measured temperature difference (39).

10. A load cell or a scale in accordance with claim 9,
**characterized in that**
the evaluation unit for calculating the temperature-compensated weight (41) is identical to the evaluation unit for evaluating the weight measurement signals (37) of the measuring device (23).

11. A load cell or a scale in accordance with claim 9 or claim 10,
**characterized in that**
the evaluation unit is configured such that the temperature-compensated weight (41) is calculated continuously from the respective currently generated weight measurement signal (37) and from the respective currently measured temperature difference (39).

12. A load cell or a scale in accordance with at least one of the claims 9 to 11,
**characterized in that**
a linear or quadratic function is used as the basis for the calculation of the temperature-compensated weight (41) from the generated weight measurement signal (37) and from the measured temperature difference (39).

13. A load cell or a scale in accordance with at least one of the claims 9 to 12 and claim 7,
**characterized in that**
the evaluation unit is adapted to apply a DC current having a predefined polarity and subsequently to apply a DC current of the opposite polarity to the thermocouple (25) and in so doing to measure the respective voltage dropping at the thermocouple (25) and to determine an absolute temperature and/or a temperature difference from the two measured voltages.

14. A load cell or a scale in accordance with at least one of the claims 9 to 13 and claim 7,
**characterized in that**
the evaluation unit is adapted to apply an AC voltage to the thermocouple (25), to measure the effective value of the voltage dropping at the thermocouple (25) in this respect and to calculate an absolute temperature therefrom; and/or
**in that** the evaluation unit is adapted, in the case of a thermocouple (25) having neither current nor voltage applied, to measure the voltage dropping at the thermocouple (25) and to determine a temperature difference therefrom.

15. A method relating to the operation of a scale having a load cell (11) in which a temperature-dependent weight measurement signal (37) corresponding to an acting weight is generated and a temperature difference (39) between a first point (31), namely a measurement point, of the load cell (11) and a second point (33), namely a comparison point, of the load cell (11), is measured by a temperature sensor (25), namely by a single thermocouple, with a temperature-compensated weight (41) being calculated from the generated weight measurement signal (37) and from the measured temperature (39).

## Revendications

1. Cellule de pesage pour une balance, comportant un dispositif de mesure (23) pour la génération d'un signal de mesure de poids (37) dépendant de la température et correspondant à un poids actif, et au moins un capteur de température (25) pour la mesure d'une température (39) de la cellule de pesage (11), un poids (41) compensé en température pouvant être calculé à partir du signal de mesure de poids généré (37) et de la température mesurée (39) au moyen d'une unité d'évaluation,
**caractérisée en ce que**
le capteur de température (25) est réalisé sous la forme d'un capteur de température (25) mesurant une différence de température (39) entre un premier emplacement (31) qui est un emplacement de mesure de la cellule de pesage (11) et un second emplacement (33) qui est un emplacement de comparaison de la cellule de pesage (11), à savoir sous la forme d'un thermocouple unique mesurant la différence de température.

2. Cellule de pesage selon la revendication 1,
**caractérisée en ce que**
la cellule de pesage (11) comprend un corps à ressort (13), et **en ce que** le dispositif de mesure comprend au moins une jauge de déformation (23) pour détecter la déformation élastique du corps à ressort (13) afin de générer un signal de mesure du poids (37), la ou les jauge(s) de déformation (23) et le capteur de température (25) mesurant une différence de température (39) étant disposés chacun sur le corps à ressort (13).

3. Cellule de pesage selon la revendication 2,
**caractérisée en ce que**
le corps à ressort (13) comprend une portion de réception de force (15), une portion d'introduction de force (17) et une portion de déformation (19) disposée entre la portion de réception de force (15) et la portion d'introduction de force (17), le capteur de température (25) mesurant une différence de température (39) s'étendant au-delà de la portion de déformation (19), en particulier de telle sorte que le premier emplacement (31) se situe sur la portion d'introduction de force (17) et le second emplacement (33) se situe sur la portion de réception de force (15), ou inversement.

4. Cellule de pesage selon la revendication 2 ou 3,
**caractérisée en ce que**
la ou les jauge(s) de déformation (23) et l'un parmi deux conducteurs (27, 29) du thermocouple (25) sont fabriqués en le même matériau.

5. Cellule de pesage selon l'une au moins des revendications précédentes,
**caractérisée en ce que**
le thermocouple (25) comprend deux conducteurs (27, 29) en matériaux différents.

6. Cellule de pesage selon l'une au moins des revendications précédentes,
**caractérisée en ce que**
il est prévu un autre capteur de température (35) pour mesurer une température absolue.

7. Cellule de pesage selon l'une au moins des revendications précédentes,
**caractérisée en ce que**
le thermocouple (25) comprend deux conducteurs (27, 29), l'un au moins des deux conducteurs (27, 29) comprenant en supplément un élément de résistance (43) électrique dépendant de la température.

8. Balance comportant une cellule de pesage (11) selon l'une au moins des revendications précédentes.

9. Cellule de pesage selon l'une au moins des revendications 1 à 7 ou balance selon la revendication 8,
**caractérisée en ce que**
il est prévu une unité d'évaluation qui est conçue pour calculer un poids (41) compensé en température à partir du signal de mesure de poids généré (37) et de la différence de température mesurée (39).

10. Cellule de pesage ou balance selon la revendication 9,
**caractérisée en ce que**
l'unité d'évaluation destinée à calculer le poids (41) compensé en température est identique à l'unité d'évaluation destinée à évaluer les signaux de mesure de poids (37) du dispositif de mesure (23).

11. Cellule de pesage ou balance selon la revendication 9 ou 10,
**caractérisée en ce que**
l'unité d'évaluation est réalisée de telle sorte que le poids (41) compensé en température est calculé en continu à partir du signal de mesure de poids (37) respectif généré actuellement et de la différence de température (39) respective mesurée actuellement.

12. Cellule de pesage ou balance selon l'une au moins des revendications 9 à 11,
**caractérisée en ce que**
le calcul du poids (41) compensé en température à partir du signal de mesure de poids (37) généré et de la différence de température (39) mesurée est basé sur une fonction linéaire ou carrée.

13. Cellule de pesage ou balance selon l'une au moins des revendications 9 à 12 et la revendication 7,
**caractérisée en ce que**
l'unité d'évaluation est conçue pour appliquer au thermocouple (25) un courant continu avec une polarité donnée et ensuite avec la polarité opposée, et pour mesurer alors la chute de tension respective au niveau du thermocouple (25), et pour définir une température absolue et/ou une différence de température à partir des deux tensions mesurées.

14. Cellule de pesage ou balance selon l'une au moins des revendications 9 à 13 et la revendication 7,
**caractérisée en ce que**
l'unité d'évaluation est conçue pour appliquer une tension alternative au thermocouple (25), pour mesurer la valeur efficace de la chute de tension au niveau du thermocouple (25) et pour en calculer une température absolue, et/ou
l'unité d'évaluation est conçue pour mesurer la chute de tension au niveau du thermocouple (25) lorsque ni courant ni tension ne sont appliqués au thermocouple (25), et pour en définir une différence de température.

15. Procédé relatif au fonctionnement d'une balance comportant une cellule de pesage (11),
dans lequel
un signal de mesure de poids (37) dépendant de la température et correspondant à un poids actif est généré, et une différence de température (39) entre un premier emplacement (31) qui est un emplacement de mesure de la cellule de pesage (11) et un second emplacement (33) qui est un emplacement de comparaison de la cellule de pesage (11) est mesurée au moyen d'un capteur de température (25), à savoir un thermocouple unique, et un poids (41) compensé en température est calculé à partir du signal de mesure de poids généré (37) et de la température mesurée (39).
